# EUROPÄISCHE PATENTSCHRIFT

(11) **EP 1 776 578 B1**
(45) Veröffentlichungstag und Bekanntmachung des Hinweises auf die Patenterteilung: **23.04.2008**
(21) Anmeldenummer: 05771911.4
(22) Anmeldetag: 03.08.2005
(51) Int. Cl.: G01N 21/59, B07C 5/342, B07C 5/04

(54) **VERFAHREN ZUM DETEKTIEREN UND ENTFERNEN VON FREMDKÖRPERN**
METHOD FOR DETECTING AND REMOVING FOREIGN BODIES
PROCEDE DE DETECTION ET D'ELIMINATION DE CORPS ETRANGERS

(30) Priorität: 05.08.2004 AT 5622004
(43) Veröffentlichungstag der Anmeldung: 25.04.2007
(73) Patentinhaber: Binder & Co. Aktiengesellschaft, 8200 Gleisdorf (AT)
(72) Erfinder: HUBER, Reinhold, A-8280 Fürstenfeld (AT); PANSINGER, Christian, A-8052 Graz (AT)
(74) Vertreter: Henhapel, Bernhard
(86) Internationale Anmeldenummer: PCT/EP2005/053804
(87) Internationale Veröffentlichungsnummer: WO 2006/015965

(56) Entgegenhaltungen:
- EP-A- 0 315 697
- GB-A- 921 362

## Beschreibung

### GEBIET DER ERFINDUNG

Die vorliegende Erfindung bezieht sich auf ein Verfahren zum Detektieren und Entfernen von Fremdkörpern in einem durch eine Detektiervorrichtung geleiteten Bruchglasmaterialstrom, in welcher gepulste Lichtstrahlen durch den Bruchglasmaterialstrom hindurch auf Photozellen mit einer Intensität auftreffen, die abhängig ist von den Transmissionseigenschaften der den Bruchglasmaterialstrom bildenden Objekten und bei Unterschreiten eines vordefinierten Schwellwertes der Intensität eine mit der Photozelle verbundene Steuereinheit stromabwärts der Photozelle angeordnete Ausblasdüsen aktiviert, welche im Bruchglasmaterialstrom vorhandene Fremdkörper aus demselben an einen vordefinierten Ort ablenkt.

### STAND DER TECHNIK

Dieses Verfahren findet bereits bei einer speziellen Art von Bruchglassortiervorrichtungen Anwendung. Die Detektiervorrichtung ist dort als einstückige Einheit in die Bruchglassortiervorrichtung eingesetzt und dadurch auch leicht wieder austauschbar. Sie besteht im wesentlichen aus Lichtquellen, Photozellen sowie die von den Lichtquellen emittierten Lichtstrahlen auf die Photozellen fokussierenden Linsensystemen, wobei zwischen den Lichtquellen, die vorzugsweise als Infrarot-Diodenlichtquellen ausgeführt sind, und den Photozellen ein Freiraum vorhanden ist, durch welchen eine Materialrutsche für den Bruchglasstrom geführt ist. Dabei sind mehrere Lichtquellen, beispielsweise acht, zu einer Sendereinheit zusammengefasst und stehen einer Empfängereinheit gegenüber, die im wesentlichen aus einem Linsensystem und einer Photozelle besteht. Das Linsensystem dient zur Fokussierung der Lichtstrahlen der acht Lichtquellen auf die Photozelle. Vorzugsweise sind mehrere Sendereinheiten über die gesamte Breite der Materialrutsche verteilt angeordnet. Die Lichtquellen einer jeden Sendereinheit sind nicht gleichzeitig aktiv, sondern werden nacheinander in kurzen Zeitabständen von beispielsweise 1ms aktiviert, so dass jeweils die ersten, dann die zweiten, dann die dritten usw. Lichtquellen einer jeden Sendereinheit gleichzeitig aktiv sind und die emittierten Lichtstrahlen durch den vorbeiströmenden Bruchglasmaterialstrom über das jeweils zugeordnete Linsensystem auf die ebenfalls zugeordnete Photozelle auftreffen. Jede Sender/Empfängereinheit bildet somit eine Detektierbahn, der in weiterer Folge eine Ausblasdüse zugeordnet ist, die von einer Steuereinheit angesteuert wird. Die Steuereinheit steuert gleichzeitig die Aktivierung der Lichtquellen sowie empfängt die Signale der Photozellen bzw. misst die dort durch das Auftreffen der Lichtstrahlen erzeugte Spannung.

Bei einmaligem Unterschreiten (ein LED-Impuls => Auflösung bzw. Bildpunkt) eines vordefinierten Schwellwertes der gemessenen Lichtintensität einer Detektierbahn durch die entsprechende Photozelle derselben, wird durch einen Analog-Komperator, der Bestandteil einer Steuereinheit ist ein Ventilsteuersignal generiert. Die Steuereinheit aktiviert unter Berücksichtigung einer gewissen Verzögerung, welche sich durch die Bewegung des detektierten, möglichen Fremdkörpers in Richtung des Materialflusses ergibt, die stromabwärts zu der Sender/Empfängereinheit angeordnete, dieser Detektierbahn zugeordnete Ausblasdüse.

Diese bekannte Bruchglassortiervorrichtung samt Detektiervorrichtung weist den Vorteil auf, dass sie sehr günstig in der Anschaffung ist und sich auch durch enorme Kompakt- und Robustheit auszeichnet. Durch die Möglichkeit die gesamte Detektiervorrichtung auszutauschen, erübrigt sich eine langwierige Justierung beim Kunden und Betreiber der Bruchglassortiervorrichtung. Dies kann beim Hersteller erfolgen. Beim Kunden und Betreiber muss die Detektiervorrichtung dann nur mehr in die Bruchglassortiervorrichtung eingeschoben werden.

Das dabei angewandte Verfahren zur Detektierung und Entfernung der Fremdkörper hat sich jedoch als nachteilig erwiesen, insbesondere deshalb, da es sich um ein bahnorientiertes (genauer noch: bildpunktorientiertes) Verfahren handelt, dh. Entscheidungen, ob die jeweilige Ausblasdüse einer Detektierbahn aktiviert werden soll oder nicht basieren lediglich auf der Einzelinformation, ob bei einer Photozelle einer Detektierbahn (= Empfängereinheit) der Schwellwert unterschritten wird oder nicht. Über die Form, die Größe, die Lage und die Homogenität des möglichen Fremdkörpers kann bei dem bekannten Verfahren keine Aussage getroffen werden, demgemäß sind auch Fehlerkennungen und Ungenauigkeiten beim Ausblasen nicht gänzlich zu verhindern.

### DARSTELLUNG DER ERFINDUNG

Es ist daher die Aufgabe der vorliegenden Erfindung, diesen Nachteil zu verhindern und ein Verfahren der eingangs erwähnten Art zu schaffen, das mit den eingangs beschriebenen, bekannten Bruchglassortier- und Detektiervorrichtungen durchgeführt werden kann, somit die beschriebenen Vorteile dieser Vorrichtungen hinsichtlich Robustheit und Austauschbarkeit erhalten bleiben, das jedoch gegenüber dem bekannten Verfahren eine erhöhte Ausblasgenauigkeit ermöglicht.

Erfindungsgemäß wird dies durch die kennzeichnenden Merkmale des Anspruchs 1 erreicht.

Durch die Verknüpfung der Positionsdaten mit den beim Auftreffen der aus mehreren, nacheinander aktivierten Lichtquellen emittierten Lichtstrahlen auf der jeder Lichtquelle zugeordneten Photozelle detektierten Intensitätswerten und Abspeichern dieser verknüpften Daten gemeinsam mit den Zeitdaten zum Zeitpunkt der Detektierung in einem Speicher kann die Position eines Punktes des Objektes im Bruchglasmaterialstrom exakt festgestellt werden. Durch die Verknüpfung dieser Daten mit zu einem späteren Zeitpunkt auf gleiche Art und Weise ermittelten Daten kann ein digitales Abbild des Bruchglasmaterialstroms erzeugt und daraus geometrische Daten, wie Form, Größe und Lage der einzelnen Objekte bestimmt werden.

Zu einem bestimmten Zeitpunkt t=0 treffen die von mehreren, nacheinander aktivierten Lichtquellen emittierten Lichtstrahlen auf eine zugeordnete Photozelle mit einer bestimmten Intensität I auf. Geht man davon aus, dass die Lichtquellen über die gesamte Breite x des über eine Materialrutsche beförderten Bruchglasmaterialstromes verteilt angeordnet sind und somit die emittierten Lichtstrahlen diese Breite ebenfalls abdecken, ergibt sich somit zum Zeitpunkt t=0 ein eindimensionales Abbild des Bruchglasmaterialstromes, also ein Abbild einer Zeile über die gesamte Breite des Bruchglasmaterialstromes. Zum Zeitpunkt t=1 liefern die von den aktivierten Lichtquellen emittierten und auf den Photozellen auftreffenden Lichtstrahlen wiederum ein eindimensionales Abbild des Bruchglasmaterialstromes. Gemeinsam mit den zuvor gespeicherten Daten zum Zeitpunkt t=0 ergibt sich somit jedoch bereits ein zweidimensionales Abbild des Bruchglasmaterialstromes, da zum Zeitpunkt t=1 dieser bereits um eine Strecke y (Fließrichtung des Bruchglasmaterialstroms) weitergewandert ist und auf diese Art und Weise daher auch eine Ausdehnung der den Bruchglasmaterialstrom bildenden Objekte in y Richtung detektierbar ist. Von den jeweiligen, punktweise detektierten Objekten sind somit nicht nur aufgrund der Positionsdaten der Lichtquellen die x Koordinaten der detektierten Punkte der Objekte und somit auch möglicher Fremdkörper bekannt, sondern aufgrund der Zeitdaten auch die Erstreckung in Fließrichtung des Bruchglasmaterialstromes (y-Richtung). Mit anderen Worten werden die jeweils zeilenweise erfassten Daten (Positionsdaten, Intensitätswerte) zu verschiedenen Zeitpunkten miteinander verknüpft und auf diese Weise ein digitales, zweidimensionales Abbild des Bruchglasmaterialstroms erzeugt.

Vorteilhaft erweisen sich die kennzeichnenden Merkmale des Anspruchs 2, da durch die Einteilung der Intensität in unterschiedliche Wertbereiche eine Datenreduktion ohne wesentlichen Informationsverlust erreicht wird. Die dabei festgelegten Intensitätsbereiche wurden aus Erfahrungswerten ermittelt und stellen gleichzeitig auch die Basis für eine einfache Bildverarbeitung dar, da eine Einteilung der detektierten Objekte hinsichtlich ihrer Ausblasrelevanz getroffen werden kann.

Ein weiterer und bedeutender Vorteil ergibt sich durch das Gruppieren der Lichtquellen gemäß kennzeichnenden Merkmalen des Anspruchs 3 zu Sendergruppeneinheiten, sowie das Aktivieren der Lichtquellen einer Sendergruppeneinheit in einem zeitlichen Abstand nacheinander bzw. gemäß Anspruch 4 je mindestens einer Lichtquelle je Sendergruppeneinheit gleichzeitig. Dadurch wird einerseits Streulicht vermieden, was die Genauigkeit der Detektiervorrichtung erhöht. Andererseits können aber auch die gemessenen Intensitätswerte von nebeneinanderliegenden Lichtquellen ausgestrahlten Lichtstrahlen sehr gut miteinander verknüpft werden, obwohl lediglich eine Photozelle für mehrere Lichtquellen zur Verfügung steht. Durch die kennzeichnenden Merkmale des Anspruchs 5 kann die Ausblasgenauigkeit zusätzlich erhöht werden. Die kennzeichnenden Merkmale der Ansprüche 6 und 7 dienen der Aufbereitung der ermittelten Daten und der Sichtbarmachung für den Benutzer. Vorteilhaft erweist sich dabei vor allem die zusätzliche Einbeziehung benachbarter Bildpunkte des zweidimensionalen Abbildes, wodurch charakteristische Merkmale erkannt und somit kritische Glasobjekte nicht zu KSP (Keramik, Stein, Porzellan)-Objekten zugeordnet und folglich auch nicht als Fremdkörper ausgeschieden werden, wodurch eine wesentliche Erhöhung der Ausblasgenauigkeit erzielt wird und obendrein durch die Reduzierung der Ausblasvorgänge Energie gespart wird.

### KURZE BESCHREIBUNG DER FIGUREN

Im Anschluss erfolgt nun eine detaillierte Beschreibung der Erfindung anhand eines Ausführungsbeispiels.

Dabei zeigt
- Fig.1: eine vereinfachte schematische Darstellung einer bekannten Sortiervorrichtung zur Durchführung des erfindungsgemäßen Verfahrens
- Fig.2: eine vereinfachte schematische Darstellung der Detektiervorrichtung
- Fig.3: eine Detailansicht der Anordnung der Lichtquellen einer Sendereinrichtung
- Fig.4: eine schematische Ansicht einer Detektiervorrichtung
- Fig.5: ein Diagramm mit definierten Schwellwerten und Wertebereiche
- Fig.6: eine vereinfachte schematische Darstellung einer Sendereinheitsgruppe und des Algorithmus für die Ansteuerung der Ausblasdüsen

### WEGE ZUR AUSFÜHRUNG DER ERFINDUNG

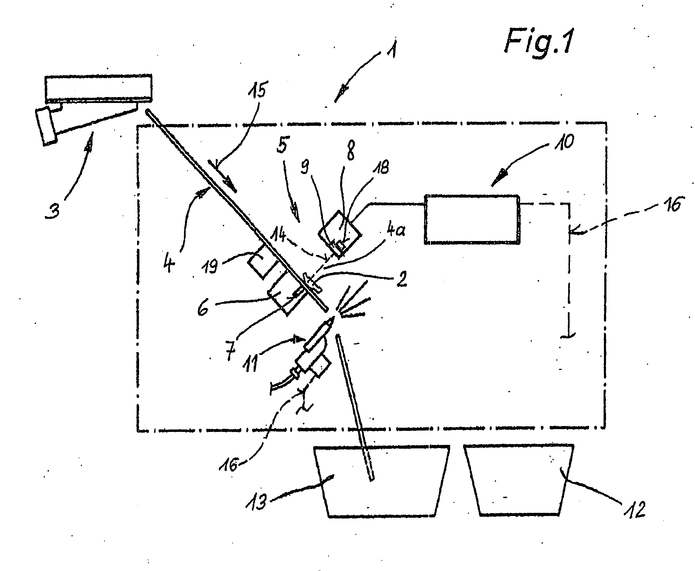

Fig.1 zeigt schematisch eine Sortiervorrichtung 1 zum Aussortieren von Fremdkörpern 2, wie beispielsweise Metallstücke, Keramik- oder Steingutstücke aus einem Bruchglasmaterialstrom. Bei dieser Vorrichtung 1 ist eine an die Aufgabestation 3 anschließende Materialrutsche 4 vorgesehen, in deren unterem Bereich eine Detektiervorrichtung 5 zur Erfassung von Fremdkörpern 2 im Bruchglasstrom angeordnet ist. Diese Detektiervorrichtung 5 besteht im wesentlichen aus mindestens einer Sendereinheit 6 mit nacheinander gepulsten Lichtquellen 7, vorzugsweise Infrarot-Diodenlichtquellen, sowie mindestens einer Empfängereinheit 8, die ein Linsensystem 9 und eine dahinter angeordnete Photozelle 18. umfasst, sowie einer Steuereinheit 10, welche mit am Ende der Materialrutsche 4 angeordneten Ausblasdüsen 11 verbunden ist und diese in Abhängigkeit der Signale der Sender- und Empfängereinheit, wie später noch detaillierter beschrieben wird, steuert. Die Ausblasdüsen 11, die stromabwärts der Sender- und Empfängereinheit 6,8 am Ende der Materialrutsche 4 angeordnet sind, befinden sich gleichzeitig in einem Bereich, in welchem der Bruchglasmaterialstrom dem Verlauf einer Wurfparabel folgt. Bei einer Aktivierung der Ausblasdüsen 11 durch die Steuereinheit 10 werden die Fremdkörper 2 aus dem Bruchglasmaterialstrom heraus ausgelenkt, so dass diese in einen Abfallbehälter 12 fallen und somit von dem in einen anderen Behälter 13 fallenden Bruchglas getrennt werden.

Die Detektiervorrichtung 5 selbst ist als sogenannte "Black Box" mit wenigen Handgriffen an die Sortiervorrichtung 1 montierbar und auch wieder entfernbar, so dass ein Austausch innerhalb weniger Minuten erfolgen kann.

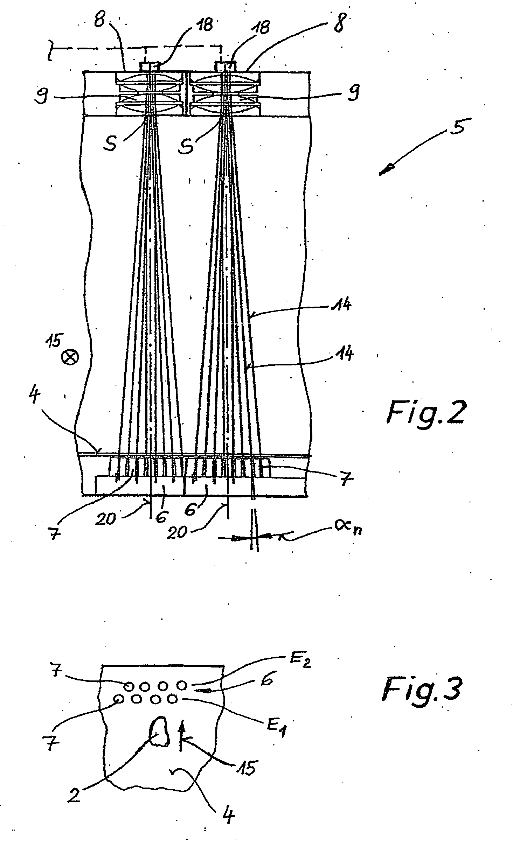

Wie bereits erwähnt umfasst die Sendereinheit 6 Lichtquellen 7, vorzugsweise geradlinige Lichtstrahlen 14 abstrahlende Infrarot-Diodenlichtquellen. Fig.1 zeigt einen solchen Lichtstrahl 14 zwischen der Sendereinheit 6 und der Empfängereinheit 8 vereinfacht dargestellt. Der Lichtstrahl 14 wird von einem Linsensystem 9, das Bestandteil der Empfängereinheit 8 ist auf eine Photozelle 18 (siehe Fig.2) umgelenkt bzw. fokussiert. Das dabei erzeugte Signal wird an die Steuereinheit 10 weitergeleitet.

Die Lichtquellen 7 sind unterhalb der Materialrutsche 4, die optisch durchsichtig ausgeführt ist, insbesondere unter der Detektierstrecke 4a angeordnet, so dass der Bruchglasmaterialstrom praktisch unmittelbar vor den Lichtquellen 7 vorbeiströmt. Die Ausrichtung erfolgt dabei bevorzugterweise so, dass die Lichtquellen 7 auf den Bereich des Schnittpunkts S der optischen Achse 20 des Linsensystems 9 mit dem Linsensystem 9 ausgerichtet sind, unabhängig von ihrer Anordnung und Platzierung in Bezug auf die Empfängereinheit oder die Materialrutsche 4.

Fig.2 und Fig.3 zeigen bevorzugte Anordnungsmöglichkeiten der Lichtquellen 7 mit konvergierenden Lichtstrahlen. Selbstverständlich ist die Erfindung jedoch auch bei Systemen mit parallel zueinander verlaufenden Lichtstrahlen anwendbar. Letztere befinden sich ebenfalls noch im Einsatz, weisen jedoch den Nachteil auf, dass die weiter von der optischen Achse 20 entfernten Lichtstrahlen mit einer gewissen Unschärfe auf die Photozelle 18 fokussiert werden was die Ausblasgenauigkeit negativ beeinflusst.

In Fig.2 sind die Lichtquellen 7 einer Sendereinheit 6 in einer Ebene E₁ angeordnet, wobei sich die optische Achse 20 des Linsensystems 9 der jeweils zugeordneten Empfängereinheit 8 ebenfalls in dieser Ebene E₁ befindet. Die Materialflussrichtung zeigt in Fig.2 senkrecht auf das Blatt und ist mit Bezugszeichen 15 gekennzeichnet. Fig.2 zeigt eine Ausführungsvariante mit zwei Sendereinheiten 6 mit jeweils einer Anzahl an Lichtquellen 7 und zwei jeweils zugeordnete Empfängereinheiten 8 mit jeweils einem Linsensystem 9 und einer Photozelle 18. Selbstverständlich kann die Breite der Materialrutsche 4 auch durch eine Sendereinheit 6 und eine Empfängereinheit 8 abgedeckt werden oder aber durch mehr als zwei Sender- und Empfängereinheiten 6,8.

Jene nicht in der optischen Achse 20 liegenden Lichtquellen 7 sind um einen Winkel (α_{1,2,3,}...ₙ) zur optischen Achse 20 geneigt ausgerichtet, so dass die emittierten Lichtstrahlen 14 im Schnittpunkt S der optischen Achse 20 mit dem Linsenssystem 9 einer Empfängereinheit 8 auftreffen. Durch diese Ausrichtung ist gewährleistet, dass die schräg einfallenden Lichtstrahlen 14 parallel zur optischen Achse 20 abgelenkt werden und so eine optimale Abbildung auf der Photozelle 18 erzielt wird. Zu beachten ist, dass bei dieser bevorzugten Ausführungsform der Erfindung die Lichtstrahlen 14 der einzelnen Lichtquellen 7 nie gleichzeitig am Schnittpunkt S auftreffen und es deshalb auch zu keiner Interferenz kommen kann. Die Ansteuerung der Lichtquellen 7 erfolgt gepulst, so dass jeweils eine einzelne Lichtquelle einer Sendereinheit 6 gerade aktiv ist.

Fig.3 zeigt eine schematische Draufsicht auf eine mögliche weitere bevorzugte Anordnung von Lichtquellen 7 hinter der optisch durchsichtigen Materialrutsche 4. Wie sich leicht erkennen lässt, sind die Lichtquellen 7 in zwei Ebenen E₁, E₂ in Materialflussrichtung 15 hintereinander und seitlich versetzt ausgerichtet, wodurch eine noch genauere Auflösung der Detektiervorrichtung 5 erreicht wird. Dieser Versatz in Materialflussrichtung 15 der detektierten Intensitätswerte wird mittels eines Filters korrigiert und ausgerichtet bevor die Daten der Bildverarbeitung zugeführt werden.

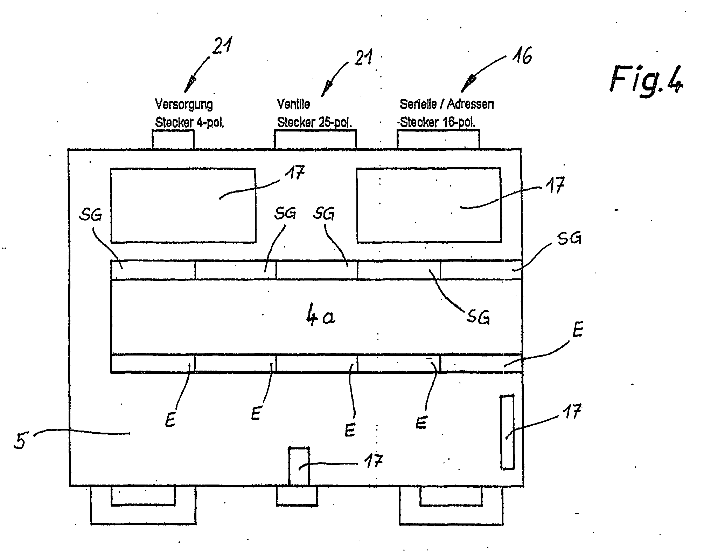

In einem bevorzugten Ausführungsbeispiel besteht eine Detektiervorrichtung 5 (siehe Fig.4) aus fünf parallel arbeitenden Sendereinheitsgruppen SG mit jeweils zweiunddreißig Diodenlichtquellen 7. Die Diodenlichtquellen 7 einer Sendereinheitsgruppe SG sind wiederum in vier Sendereinheiten 6 zu jeweils acht Diodenlichtquellen 7 zusammengefasst. Jeder Sendereinheitsgruppe SG ist eine Empfängereinheitsgruppe E zugeordnet, die aus vier Empfängereinheiten 8 besteht. Die von jeder Sendereinheit 6 emittierten Lichtstrahlen sind auf das Linsensystem 9 und in Folge auf die Photozelle 18 des der jeweiligen Sendereinheit 6 zugeordneten Empfängereinheit 8 ausgerichtet. Jede Empfängereinheitsgruppe E umfasst somit vier Empfängereinheiten 8 und somit vier Linsensysteme 9 und vier Photozellen 18. Sämtliche Empfängereinheiten 8 zusammen umfassen zwanzig Linsensysteme 9 und zwanzig Photozellen 18. Des weiteren zeigt die in Fig.4 ersichtliche Detektiervorrichtung 5 noch Anschlüsse 21 zur Stromversorgung und Verbindung mit den Ausblasventilen 11 sowie Datenleitungsanschlüsse 16 und verschiedene Bedienelemente 17

Alle zweiunddreißig Diodenlichtquellen 7 jeder der parallel arbeitenden Sendereinheitsgruppen SG werden innerhalb der Zykluszeit von 1ms nacheinander, gruppenweise aktiviert, also beispielsweise werden die jeweils ersten Diodenlichtquellen einer jeden Sendereinheitsgruppe SG gleichzeitig aktiviert. Nach deren Abschaltung erfolgt die Aktivierung der jeweils zweiten Diodenlichtquellen 7 einer jeden Sendereinheitsgruppe SG usw. Somit werden von den insgesamt zwanzig Photozellen 18 in einem Zyklus 160 Signale (entspricht 32 Zeilen) erfasst. Dies entspricht der einmaligen Erfassung der gesamten Sortierbreite der Materialrutsche 4 von 500 mm. Es sei an dieser Stelle angemerkt, dass die beschriebene Ausführungsvariante lediglich beispielhaft zu verstehen ist und dass die Anzahl der Sendereinheitsgruppen SG, Sendereinheiten 6 sowie der Diodenlichtquellen 7 und der Empfängereinheitsgruppen E, Empfängereinheiten 8 und somit der Linsensysteme 9 und Photozellen 18 willkürlich erfolgt ist und sich bei Praxistests als verlässlich herausgestellt hat. Selbstverständlich ist es dem Fachmann vollkommen klar, dass auch andere Einteilungen zu einem guten Ergebnis führen können, ohne aus dem eigentlichen Schutzbereich der Erfindung herauszuführen.

In den bisherigen Systemen wird durch die gepulsten Lichtquellen 7 eine Art "Blitzaufnahme" erzeugt, die als Einzelinformation, isoliert auf einen Punkt bezogen, eine JA- oder NEIN-Entscheidung je Lichtquelle 7 bewirkt und daraus folgend durch die Steuereinheit 10 zeitverzögert die zugehörige Ausblasdüse 11 bei Bedarf aktiviert wird. Dies wirkt sich insofern nachteilig aus, da bereits bei einmaliger Unterschreitung des Grenzwertes ein Fremdkörper 2 angenommen wird und somit folglich die zugehörige Ausblasdüse 11 aktiviert Wird. Es wird jedoch dabei kein Unterschied zwischen Objekten aus Glas, die beispielsweise mit Papier oder mit Schmutzpartikel versehen sind, und Objekten beispielsweise aus Keramik, Stein oder Porzellan, die einen tatsächlichen Fremdköper 2 darstellen, festgestellt und somit werden auch Nicht-Fremdkörper ausgeschieden und dadurch der Ausscheidungsgrad unnötig verringert.

Diese aus einer Vielzahl von gepulsten Lichtquellen 7 erzeugten und somit vom System gelieferten und in Folge gespeicherten Daten erzeugen ein digitales Abbild mit einem hohen Informationsgehalt und einer hohen Auflösung, beispielsweise vergleichbar mit Pixel bzw. Bildpunkten, somit in dem bevorzugten Ausführungsbeispiel 32 Zeilen mit jeweils 5 Punkten, also 160 einzelne Bildpunkte beim einmaligen Abtasten der gesamten Breite der Materialrutsche 4.

Der von der jeweiligen Photozelle 18 registrierte Intensitätswert wird in weiterer Folge von der Steuereinheit 10 mit den Positionsdaten der den Lichtstrahl 14, dessen Intensität registriert wurde, aussendenden Lichtquelle 7 verknüpft und gemeinsam mit Zeitdaten, die dem Zeitpunkt des Registrierens des Intensitätswertes entsprechen, abgespeichert. Dieser Vorgang erfolgt für jeden empfangenen Intensitätswert, der aufgrund der Aktivierung der einzelnen Lichtquellen 7 und Auftreffen der emittierten Lichtstrahlen 14 auf den zugeordneten Photozellen 18 registriert wird. Somit kann zu einem Zeitpunkt t=0 für jeden durch eine Photozelle 18 registrierten Intensitätswert auf einer imaginären Geraden ein definierter Punkt gesetzt werden. Zum Zeitpunkt t=32µs wird dieser Vorgang wiederholt, so dass im beschriebenen Ausführungsbeispiel nach ca. 1ms jede der 32 Diodenlichtquellen 7 einer Sendereinheitsgruppe SG aktiviert worden ist und somit die gesamte Breite der Materialrutsche 4 abgetastet wurde. Durch jede detektierte Intensität eines Lichtstrahls 14 produziert die Steuereinheit 10 in ihrem digitalen Speicher auf einer imaginären Geraden bzw. einer imaginären Zeile einen definierten Punkt. Auf diese Art und Weise entsteht ein digitales Abbild des Bruchglasmaterialstroms über die gesamte Breite der Materialrutsche 4 innerhalb von ca. 1ms, was in der Praxis einem einzigen Zeitpunkt entspricht. Innerhalb der nächsten ca. 1ms, der Bruchglasmaterialstrom hat sich dabei bereits in Flussrichtung weiterbewegt, wird die gesamte Prozedur wiederholt und die nächste Zeile abgetastet und ein entsprechendes digitales Abbild erstellt usw., so dass auf diese Art und Weise, durch verknüpfen der Positionsdaten und Intensitätswerte sowie der Zeitdaten der gesamte Bruchglasmaterialstrom digital erfasst werden kann. Auf diese Art und Weise ist es nicht nur möglich zu erfassen, ob ein möglicher Fremdkörper 2 im Bruchglasmaterialstrom vorhanden ist, sondern auch dessen Lage, Größe und Form. Dieser Umstand trägt in weiterer Folge dazu bei, dass die Ausblasdüsen 11 exakter angesteuert werden können, insbesondere auch deren Aktivierungsdauer auf die Form und Größe eines Fremdkörpers 2 abgestimmt werden kann.

Durch die Synchronisation der zeilenweisen Dateneinlesung ist somit eine einwandfreie Simulation des Bruchglasmaterialstromes möglich und durch eine einfache Bildverarbeitung können daraus die erforderlichen Informationen für die Steuerung der Düsen zum Ausblasen der Fremdkörper berechnet werden.

Zu einer weiteren Verbesserung der Trennschärfe führt die Nutzung des Transmissionsverhaltens, das in einem, bekannten Verhältnis zum Material (Glas, Keramik,...) steht. Aufgrund der gemessenen Intensität wird ein Abbild der Transmissionseigenschaften erstellt und diese beispielsweise in vier Wertbereiche unterteilt bzw. zugeordnet, nämlich
- H (Hintergrund):: kein Objekt zwischen Sender- und Empfängereinheit (z.B. Wertbereich für Intensität ≥ 95%)
- G (Glas):: Glasobjekt zwischen Sender- und Empfängereinheit (z.B. Wertbereich für Intensität zwischen ≥ 30 und < 95%)
- P (Papier):: Glasscherbe mit Papier zwischen Sender- und Empfängereinheit (z.B. Wertbereich Intensität zwischen ≥ 17 und < 30%)
- K (KSP):: Keramik-, Stein- oder Porzellanobjekt zwischen Sender- und Empfängereinheit (z.B. Wertbereich Intensität > 17%)

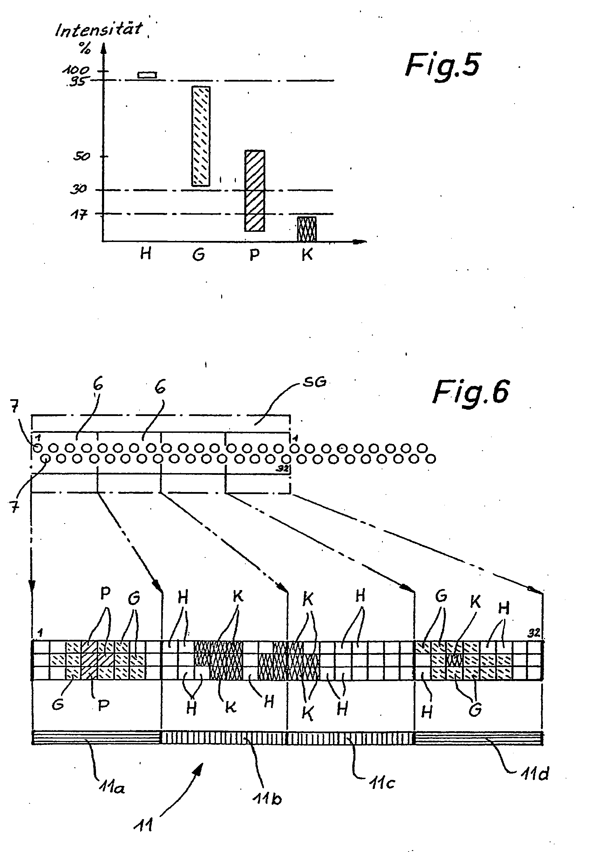

Wie in Fig. 5 dargestellt werden die ermittelten Einzelsignale durch die Zuordnung zu den entsprechenden Wertbereichen zwischen den definierten Schwellwerten klassifiziert und abgespeichert. Dadurch ergibt sich eine Reduktion der Daten, die aber für die weitere Bestimmung hinsichtlich der Aktivierung der Ausblasventile 11 keinen wesentlichen Informationsverlust bedeutet.

Wie weiters aus der Darstellung zu sehen ist, kommt es teilweise zu Überschneidungen in den Wertbereichen. Diese sind darauf zurückzuführen, dass beispielsweise dicke oder dunkle Glasobjekte ähnliche Intensitätswerte liefern wie etwa Glas mit Papier oder KSP-Objekte wiederum ähnliche Intensitätswerte wie etwa durch Schmutz beeinträchtigtes Glas. Um den Glasverlust bei der Ausscheidung zu reduzieren und folglich den Wirkungsgrad von Bruchglassortiervorrichtungen zu erhöhen, werden die Einzelsignale mit den benachbarten in Verbindung gebracht und daraus ein geeigneter Algorithmus für die Ansteuerung der Ausblasdüsen 11 entwickelt.

In Fig. 6 ist an Hand eines Beispieles vereinfacht ein Algorithmus für die Ansteuerung der Ausblasdüsen 11 für eine Sendereinheitsgruppe SG mit vier Sendereinheiten 6 und jeweils acht Lichtquellen 7 dargestellt. Daraus ist ersichtlich, wie die durch 32 Lichtquellen 7 erzeugten und bereits klassifizierten Signale in Zeilen (vereinfacht nur drei Zeilen dargestellt) gespeichert sind. Durch die Verknüpfung der Einzelsignale werden gleichzeitig auch Nachbarschaftsbeziehungen berücksichtigt und dadurch können die Ausblasdüsen 11 zielgerichteter aktiviert werden.

Grundsätzlich ist die Homogenität eines Objektes entscheidend. Ist kein homogener Körper, also keine niedrigen Werte für die Intensität erkennbar, erfolgt auch keine Aktivierung der Ausblasdüsen 11.

Im vorliegenden Beispiel werden die Ausblasdüsen 11b und 11c aufgrund des erkannten Fremdkörpers 2 durch die mehrfach als KSP-Objekte klassifizierten und abgespeicherten Signale K zum Ausblasen aktiviert. Hingegen wird die Ausblasdüse 11d nicht zum Ausblasen aktiviert, trotz eines erkannten Fremdkörpers 2 durch ein einziges als KSP-Objekt klassifiziertes Signal K jedoch unter Mitberücksichtigung der benachbarten als Glasobjekt klassifizierte Signale G. Dies kann beispielsweise darauf zurückgeführt werden, dass sich auf dem Glasobjekt vereinzelt Schmutzteilchen befinden.

Auch die Ausblasdüse 11a wird aufgrund der zahlreich abgespeicherten Signale G und P nicht aktiviert, da trotz teilweiser Verunreinigungen durch Papier eindeutig ein Glasobjekt erkannt wird.

Durch diese Verknüpfung der Einzelsignale können auch verschiedene kritische Glasobjekte wie beispielsweise Drahtglasscherben oder Bruchteile eines Flaschenbodens als. Nicht-Fremdkörper erkannt und folglich nicht ausgeschieden werden. Dies ist darauf zurückzuführen, dass der verstärkte Bodenrand (Kipferlform) als KSP-Objekt klassifizierte Signale K liefert, jedoch in Verbindung mit den durch den benachbarten dünneren Bodenteil als Glasobjekt klassifizierten Signale G insgesamt als Glasobjekt erkannt wird. Dadurch ist die Unterscheidung etwa zu einem Keramikhenkel möglich, der überwiegend klassifizierte Signale K liefert und keine benachbarten Signale G aufweist. Durch diese Vorgangsweise werden Fremdkörper sicherer identifiziert und somit bedeutend weniger Nicht-Fremdkörper (Glasscherben) ausgeschieden, wodurch folglich auch der Wirkungsgrad wesentlich erhöht wird. Des weiteren wird durch die Reduzierung der Ausblasvorgänge auch Energie in Form von teurer Druckluft eingespart.

Das beschriebene Verfahren unter Ausnutzung der Transmissionseigenschaften von Objekten ist somit nicht nur auf Bruchglassortiervorrichtungen beschränkt sondern kann auch bei der Sortierung anderer Materialien wie beispielsweise von Mineralien und Quarze Anwendung finden.

Zur weiteren Erhöhung des Wirkungsgrades bei der Detektion und Ausscheidung der Fremdkörper 2 und um in weiterer Folge die Gutkornausbringung so gering wie möglich zu halten ist wie in Fig. 1 ersichtlich stromaufwärts zu den beschriebenen Sender- und Empfängereinheiten 6,8 ein zusätzlicher Nichteisendetektor 19 im Bereich der Materialrutsche 4 vorgesehen. Dieser Nichteisendetektor 19 ist ebenfalls mit der Steuereinheit 10 verbunden. Seine gelieferten Daten werden mit den bereits beschriebenen Daten ebenfalls verknüpft und tragen zu einer nochmaligen Verbesserung der digitalen Erstellung eines Abbildes des Bruchglasmaterialstromes und somit zu einem noch exakteren Ausblasen bei.

## Patentansprüche

1. Verfahren zum Detektieren und Entfernen von Fremdkörpern (2) in bzw. aus einem durch eine Detektiervorrichtung geleiteten Bruchglasmaterialstrom, in welcher Lichtstrahlen (14) aus mehreren, nacheinander aktivierten Lichtquellen (7) durch den Bruchglasmaterialstrom hindurch auf einer Photozelle (18) mit einer Intensität auftreffen, die abhängig ist von der Zusammensetzung des Bruchglasmaterialstroms und bei Unterschreiten eines vordefinierten Schwellwertes der Intensität eine mit der Photozelle (18) verbundene Steuereinheit (10) stromabwärts der Photozelle (18) angeordnete Ausblasdüsen (11) aktiviert, welche im Bruchglasmaterialstrom vorhandene Fremdkörper (2) aus demselben an einen vordefinierten Ort ablenkt, **dadurch gekennzeichnet, dass** jeder der die Lichtstrahlen (14) aussendenden Lichtquellen (7) Positionsdaten zugeordnet sind und zum Zeitpunkt der Aktivität einer Lichtquelle (7), deren Positionsdaten mit den beim Auftreffen der Lichtstrahlen (14) auf der jeder Lichtquelle (7) zugeordneten Photozelle (18) detektierten Intensitätswerten verknüpft werden und diese verknüpften Daten gemeinsam mit den Zeitdaten zum Zeitpunkt der Detektierung in einem Speicher vorzugsweise der Steuereinheit (10) abgelegt werden, und diese Verknüpfungsdaten mit zu einem späteren Zeitpunkt auf identische Art und Weise erhaltenen Verknüpfungsdaten verknüpft werden, um ein zweidimensionales Abbild des Bruchglasmaterialstromes zu erzeugen, das als Grundlage für die Ansteuerung der Ausblasdüsen (11) durch die Steuereinheit (10) dient.

2. Verfahren nach Anspruch 1, **dadurch gekennzeichnet, dass** in Abhängigkeit der Transmissionseigenschaften der den Bruchglasmaterialstrom bildenden Objekte unterschiedliche Wertbereiche an Intensitäten vorgesehen sind, in welche die an den Photozellen (18) detektierten Intensitäten eingeteilt werden.

3. Verfahren nach Anspruch 1 und 2, **dadurch gekennzeichnet, dass** die Lichtquellen (7) zu Sendereinheiten (6) zusammengefasst sind und jeder Sendereinheit (6) eine Photozelle (18) sowie ein Linsensystem (9) zugeordnet ist, wobei mehrere Sendereinheiten (6) zu einer Sendergruppeneinheit (SG) zusammengefasst sind und die Lichtquellen (7) einer Sendergruppeneinheit (SG) nacheinander aktiviert werden.

4. Verfahren nach Anspruch 3, **dadurch gekennzeichnet, dass** jeweils mindestens eine Lichtquelle (7) pro Sendergruppeneinheit (SG) gleichzeitig aktiviert wird.

5. Verfahren nach einem der Ansprüche 1 bis 4, **dadurch gekennzeichnet, dass** die Verknüpfungsdaten mit zusätzlichen Daten eines Nichteisendetektors (19) kombiniert werden.

6. Verfahren nach Anspruch 1 bis 5, **dadurch gekennzeichnet, dass** die Verknüpfungsdaten einer elektronischen Bildverarbeitung zugeführt werden.

7. Verfahren nach Anspruch 6, **dadurch gekennzeichnet, dass** die mittels Bildverarbeitung aufbereiteten Daten auf einem Monitor dargestellt werden.

## Claims

1. Method for detecting and removing foreign bodies (2) in or from a broken glass material flow conveyed through a detector, in which light beams (14) from a plurality of successively activated light sources (7) impinge through the broken glass material flow onto a photocell (18) at an intensity which is dependent on the composition of the broken glass material flow, and in the event of a predefined intensity threshold not being attained a control unit (10) connected to the photocell (18) activates blow-out nozzles (11) arranged downstream of the photocell (18), the nozzles deflecting foreign bodies (2) in the broken glass material flow from the broken glass material flow to a predefined location, **characterised in that** each of the light sources (7) emitting light beams (14) is associated with position data, and with the instant of the activity of a light source (7) its position data is linked with the detected intensity values when the light beams (14) impinge on the photocell (18) associated with each light source (7) and this linked data is stored, together with the time data at the instant of detection, in a memory, preferably of the control unit (10), and this linking data is linked to linking data obtained in the same way at a later instant, to produce a two-dimensional image of the broken glass material flow which is used as a basis for activation of the blow-out nozzles (11) by the control unit (10).

2. Method according to claim 1, **characterised in that**, as a function of the transmission properties of the objects forming the broken glass material flow, different intensity value ranges are provided in which the intensities detected at the photocells (18) are classified.

3. Method according to claim 1 and claim 2, **characterised in that** the light sources (7) are combined into transmitter units (6), and a photocell (18) and a lens system (9) are associated with each transmitter unit (6), a plurality of transmitter units (6) being combined into a transmitter group unit (SG) and the light sources (7) of a transmitter group unit (SG) being successively activated.

4. Method according to claim 3, **characterised in that** in each case at least one light source (7) per transmitter group unit (SG) is activated at the same time.

5. Method according to any one of claims 1 to 4, **characterised in that** the linking data is combined with additional data from a non-ferrous detector (19).

6. Method according to claim 1 to 5, **characterised in that** the linking data is supplied to electronic image processing.

7. Method according to claim 6, **characterised in that** the data processed by means of image processing is displayed on a monitor.

## Revendications

1. Procédé pour la détection et l'enlèvement de corps étrangers (2) dans un flux de verre brisé acheminé à travers un dispositif de détection, dans lequel des rayons lumineux (14) provenant de plusieurs sources lumineuses (7) activées successivement traversent le flux de verre brisé pour atteindre une cellule photo-électrique (18) avec une intensité qui dépend de la composition du flux de verre brisé et si une valeur de seuil prédéfinie d'intensité n'est pas atteinte, une unité de commande (10) reliée à la cellule photo-électrique (18) active des tuyères d'éjection (11) disposées en aval de la cellule photo-électrique (18), qui dévient les corps étrangers (2) présents dans le flux de verre brisé hors de celui-ci vers un endroit prédéfini, **caractérisé en ce que** chacune des sources lumineuses (7) émettant les rayons lumineux (14) est associée à des données de position et au moment de l'activité d'une source lumineuse (7), ses données de position sont associées aux valeurs d'intensité détectées lors de l'incidence des rayons lumineux (14) sur la cellule photo-électrique (18) associée à chaque source lumineuse (7) et ces données associées sont enregistrées, avec les données de temps concernant le moment de la déception, dans une mémoire qui appartient de préférence à l'unité de commande (10), et ces données d'association sont associées à des données d'association obtenues de manière identique à un moment ultérieur pour produire une représentation bidimensionnelle du flux de verre brisé servant de base à l'activation des tuyères d'éjection (11) par l'unité de commande (10).

2. Procédé selon la revendication 1, **caractérisé en ce qu'**en fonction des propriétés de transmission des objets formant le flux de verre brisé, différentes plages de valeurs d'intensité sont prévues dans lesquelles les intensités détectées au niveau des cellules photo-électriques (18) sont partagées.

3. Procédé selon les revendications 1 et 2, **caractérisé en ce que** les sources lumineuses (7) sont réunies dans des unités d'émission (6) et chaque unité d'émission (6) est associée à une cellule photo-électrique (18) et à un système de lentilles (9), plusieurs unités d'émission (6) étant réunies en une unité d'émission regroupée (SG) et les sources lumineuses (7) d'une unité d'émission regroupée (SG) étant activées les unes après les autres.

4. Procédé selon la revendication 3, **caractérisé en ce qu'**au moins une source lumineuse (7) par unité d'émission regroupée (SG) est activée à la fois.

5. Procédé selon l'une des revendications 1 à 4, **caractérisé en ce que** les données d'association sont combinées aux données utiles d'un détecteur de matériaux non ferreux (19).

6. Procédé selon la revendication 1 à 5, **caractérisé en ce que** les données d'association sont transmises à un traitement d'image électronique.

7. Procédé selon la revendication 6, **caractérisé en ce que** les données préparées au moyen du traitement d'image sont affichées sur un moniteur.
